# EUROPEAN PATENT SPECIFICATION

(11) **EP 1 914 835 B1**
(45) Date of publication and mention of the grant of the patent: **14.05.2014**
(21) Application number: 06122710.4
(22) Date of filing: 20.10.2006
(51) Int. Cl.: H04W 88/06, H01Q 1/24, H01Q 5/00, H01Q 9/04, H01Q 13/10

(54) **Mobile wireless communications device with multiple RF transceivers using a common antenna at a same time and related methods**
Mobiles Funkgerät mit mehrerer Sendern/Empfängern, die gleichzeitig eine gemeinsame Antenne nutzen und entsprechende Verfahren
Dispositif de communication mobile sans fil comportant plusieurs émetteurs-récepteurs utilisant une antenne commune au même temps et procédés associés

(43) Date of publication of application: 23.04.2008
(73) Proprietor: BlackBerry Limited, Waterloo, ON N2K 0A7 (CA)
(72) Inventor: Wen, Geyi, Waterloo Ontario N2T 2V1 (CA); Rao, Qinjiang, Waterloo, Ontario N2L 4X6 (CA); Ali, Shirook, Mississauga, Ontario L5N 7V1 (CA); Pecen, Mark, Waterloo, Ontario N2L 5P3 (CA)
(74) Representative: Fennell, Gareth Charles

(56) References cited:
- EP-A- 1 398 875
- EP-A1- 1 498 984
- WO-A-02/078123
- WO-A-03/094346
- WO-A1-03/085777
- US-A1- 5 241 321

## Description

### Field of the Invention

The present invention relates to the field of communications devices, and, more particularly, to mobile wireless communications devices and related methods.

### Background of the Invention

Cellular communications systems continue to grow in popularity and have become an integral part of both personal and business communications. Cellular telephones allow users to place and receive voice calls most anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

Even so, as the functionality of cellular communications devices continues to increase, so too does the demand for smaller devices which are easier and more convenient for users to carry. One challenge this poses for cellular device manufacturers is designing antennas that provide desired operating characteristics within the relatively limited amount of space available for the antenna. This is particularly true where multi-frequency band operation is required. Some wireless communications devices use multiple antennas to cover multiple radio frequency (RF) bands. Thus, as the number of operating frequency bands increases, so to does the number of antennas that are required. As a result, it may not be possible to include all of the antennas required to provide operation in all desired frequency bands in some embodiments due to such space constraints.

When the number of operating frequency bands is fairly small, some conventional mobile wireless communications devices will use a single antenna to cover the frequency bands. Yet, in such devices it may be difficult to obtain a desirable match and antenna gain over all of the frequency bands, and some trade-offs may need to be made between the frequency bands.

One example of a single antenna system used for operating over multiple frequency bands is disclosed in U.S. Patent No. 6,662,028 to Hayes et al. This patent is directed to a planar inverted-F antenna for communications devices, such as radiotelephones, that radiates within multiple frequency bands. Multiple signal feeds extend from a conductive element in respective spaced-apart locations. A respective plurality of micro-electromechanical system (MEMS) switches are electrically connected to the signal feeds and are configured to selectively connect the respective signal feeds to ground or RF circuitry. In addition, each MEMS switch can be opened to electrically isolate a respective signal feed.

Such antennas may be advantageous for operating over different frequency bands at different times, and over a relatively small range of operating frequencies. Nonetheless, there may be applications in which it is desirable to provide multi-frequency operation at the same time and over a fairly large range of frequencies but while still providing a relatively compact antenna configuration suitable for use in handheld wireless communications devices.

WO 02/078123 A1 (Ericsson) discloses a built-in, multi-antenna system for a portable communication device having, on a common flexible substrate, a first antenna (with parasitic element) which is resonant in first and second frequency bands, and a second antenna. EP 1498984 A1 discloses another example of a multiband antenna.

US 5,241,321 (Space Systems) discloses an aperture-coupled microwave antenna for processing circularly-polarized signals. A radiating patch is electromagnetically-coupled, through two elongated apertures, to two input/output ports by two conductive feeding circuits.

Aspects of the subject invention are as set out in the independent claims. Major supplementary features are as set out in the dependent claims.

### Brief Description of the Drawings

FIG. 1 is a schematic block diagram of a mobile wireless communications device in accordance with one exemplary embodiment.
FIG. 2 is a top view of an exemplary patch antenna for use in the wireless communications device of FIG. 1.
FIG. 3 is a graph of return loss vs. frequency associated with a first feed point of one implementation of the antenna of FIG. 3.
FIG. 4 is a graph of gain vs. frequency associated with the first feed point of the antenna of FIG. 3.
FIGS. 5A-5C are top views of the antenna of FIG. 3 illustrating simulated current distributions at 900 MHz, 1800 MHz, and 5 GHz, respectively, using the first signal feed point.
FIGS. 6A-6C are graphs of simulated antenna radiation patterns for the antenna of FIG. 3 at 900 MHz, 1800 MHz, and 5 GHz, respectively, using the first signal feed point.
FIG. 7 is a graph of return loss vs. frequency associated with a second feed point of the antenna of FIG 3.
FIG. 8 is a graph of gain vs. frequency associated with the second feed point of the antenna of FIG. 3.
FIG. 9 is a top view of the antenna of FIG. 3 illustrating simulated current distribution at 2.45 GHz using the second signal feed point.
FIG. 10 is a graph of a simulated antenna radiation pattern for the antenna of FIG. 3 at 2.45 GHz using the second signal feed point.
FIG. 11 is a graph of return loss vs. frequency associated with a third feed point of the antenna of FIG 3.
FIG. 12 is a graph of gain vs. frequency associated with the third feed point of the antenna of FIG. 3.
FIGS. 13A-13C are top views of the antenna of FIG. 3 illustrating simulated current distributions at 2.1 GHz, 5.2 GHz, and 5.8 GHz, respectively, using the third signal feed point.
FIGS. 14A-14C are graphs of simulated antenna radiation patterns for the antenna of FIG. 3 at 2.1 GHz, 5.2 GHz, and 5.8 GHz, respectively, using the third signal feed point.
FIG. 15 is a graph of return loss vs. frequency associated with a fourth feed point of the antenna of FIG 3.
FIG. 16 is a graph of gain vs. frequency associated with the fourth feed point of the antenna of FIG. 3.
FIG. 17 is a top view of the antenna of FIG. 3 illustrating simulated current distribution at 1.54 GHz using the fourth signal feed point.
FIG. 18 is a graph of a simulated antenna radiation pattern for the antenna of FIG. 3 at 1.54 GHz using the fourth signal feed point.
FIG. 19 is a schematic block diagram illustrating exemplary components for use in the mobile wireless communications device of FIG. 1.

### Detailed Description of the Preferred Embodiments

The present description is made with reference to the accompanying drawings, in which preferred embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements in different embodiments.

Generally speaking, a mobile wireless communications device is disclosed herein which may include a housing and a common antenna carried by the housing and having a plurality of spaced apart signal feed points thereon. Moreover, the device may further include a plurality of wireless radio frequency (RF) transceivers carried by the housing and coupled to respective ones of the signal feed points of the common antenna. Each wireless RF transceiver may also have a respective different operating frequency associated therewith. Furthermore, the device may also include a controller selectively operating at least some of the wireless RF transceivers to advantageously use the common antenna at a same time.

The device may also include a dielectric substrate carried within the housing, and the common antenna may comprise at least one conductive trace on the dielectric substrate. The common antenna may also have a reference voltage feed point. Furthermore, the common antenna may comprise a patch antenna having at least one slot therein. More particularly, the patch antenna may have a generally rectangular perimeter. By way of example, the at least one slot may include a plurality of slots defining an exterior common antenna portion and an interior common antenna portion therein. As such, at least one of the signal feed points may be on the interior common antenna portion, and/or at least one of the signal feed points may be on the exterior common antenna portion.

At least one of the wireless RF transceivers may be a cellular transceiver, for example. Also by way of example, the different operating frequencies may be within a range of about 900 MHz to 6 GHz. Further, the different operating frequencies have different user functions associated therewith. More specifically, the different user functions may include at least one of voice communication, email reception, email transmission, data reception, and data transmission, for example.

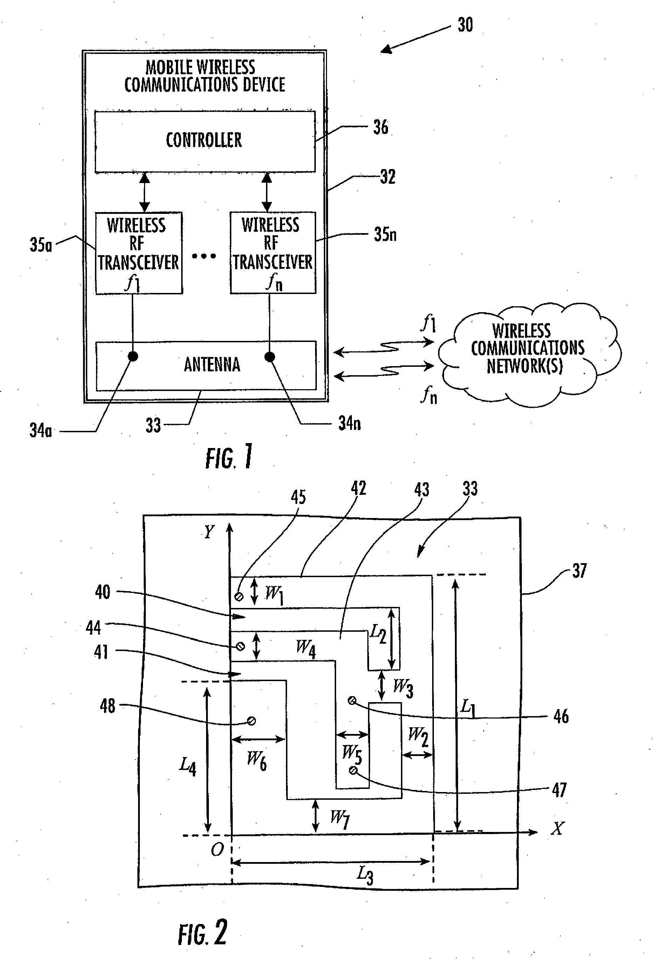

Referring initially to FIGS. 1 and 2, a mobile wireless communications device **30** for communicating with one or more communications networks **31** illustratively includes a housing **32** and a common antenna **33** carried by the housing. By way of example, the wireless communications network(s) **31** may be a cellular network and/or wireless local area network (LAN), for example. The common antenna **33** illustratively includes a plurality of spaced apart signal feed points **34a-34n** thereon.

The antenna **33** is "common" in the sense that it is shared by a plurality of wireless radio frequency (RF) transceivers **35a-35n** (e.g., cellular and/or wireless LAN transceivers) also carried by the housing **32** and coupled to respective ones of the signal feed points **34a-34n** of the common antenna **33.** Each wireless RF transceiver preferably has a respective different operating frequency associated therewith, as will be discussed further below. Furthermore, the device **30** may also include a controller **36** that selectively operates at least some (i.e., two or more) of the wireless RF transceivers **35a-35n** to advantageously use the common antenna **33** at a same time. As used herein, "at the same time" does not mean start and/or stop times are synchronized, but rather merely that there is some overlap in time. Although, it should be noted that the controller **36** need not operate multiple transceivers **35** at all times, i.e., the controller may in some instances operate only one transceiver at a time, as will be appreciated by those skilled in the art.

The device **30** also illustratively includes a dielectric substrate **37** (FIG. 2), such as a printed circuit board (PCB), carried within the housing **32,** and the common antenna **33** may include at least one conductive trace on the dielectric substrate, as will be appreciated by those skilled in the art. Typically the controller **36** and wireless RF transceivers **35a-35n** will also be carried by the dielectric substrate **37,** as may other components such as a display, keypad, etc., which will be discussed further below. However, it should be noted that the common antenna **33** need not be carried on the same PCB with the wireless RF transceivers **35a-35n** and/or controller in all embodiments, and may instead be carried on a retainer frame extension of the PCB, or otherwise mounted adjacent the PCB within the housing, as will be appreciated by those skilled in the art.

In accordance with one embodiment, the common antenna **33** may be a substantially linear antenna (e.g., inverted F antenna, monopole, etc.). In the embodiment illustrated in FIG. 2, the common antenna **33** is a patch antenna having first and second slots **40, 41** defining an exterior common antenna portion **42** and an interior common antenna portion **43** therein. It should be noted that a single slot or more than two slots may be used in other embodiments. As seen in the illustrated example, the common patch antenna **33** has a generally rectangular perimeter with length and width dimensions **L₁, L₃,** although other shapes are also possible.

In the exemplary embodiment, the common patch antenna **33** has a single reference voltage (e.g., ground) point **44,** and four signal feed points **45-48.** The reference voltage point **44,** along with the third and fourth signal feed points **47, 48,** are positioned on the interior common antenna portion **43,** while the first and second feed points **45, 46** are positioned on the exterior common antenna portion **42** as shown in FIG. 2. However, other placements and numbers of feed points are also possible, including multiple reference voltage or ground points **44.** Additionally, in some embodiments one or more of the signal feed points **45-48** could also be selectively coupled to a reference voltage/ground.

The first and second slots **40, 41** also define a plurality of leg portions defined by widths **W₁-W₇** and lengths **L₂** and **L₄** that may advantageously be selected to tune the desired operating frequencies of the antenna **33.** Some of the leg portions may be substantially related to a given operating frequency band, while other structures may influence multiple operating frequency bands, as will be appreciated by those skilled in the art.

The common antenna **33** advantageously provides a single multi-feed antenna that may be used instead of a plurality of different antennas as in some conventional handsets to provide multi-frequency band operation. This may provide advantages such as space savings, simplification of the handset design, and avoidance of electromagnetic interference (EMI) problems that are often associated with using multiple antennas in close proximity to one another.

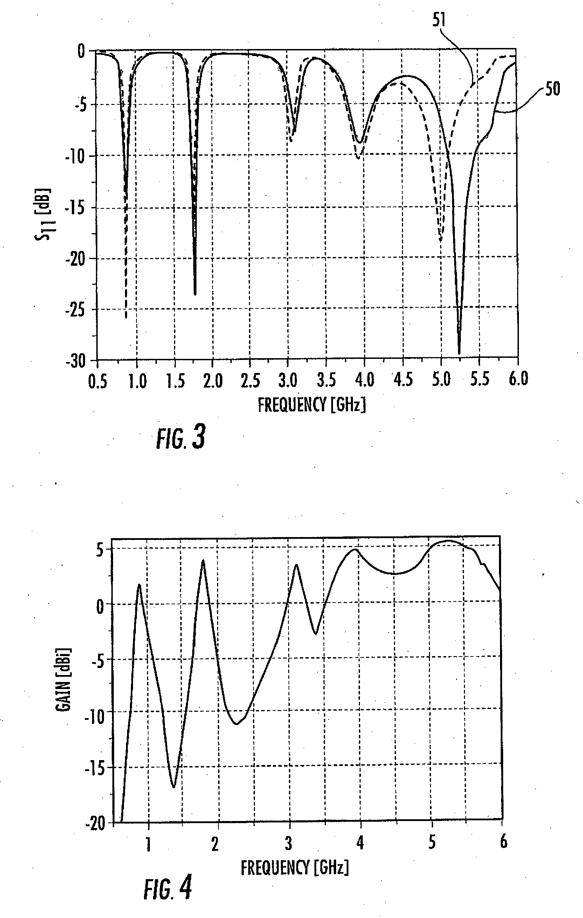

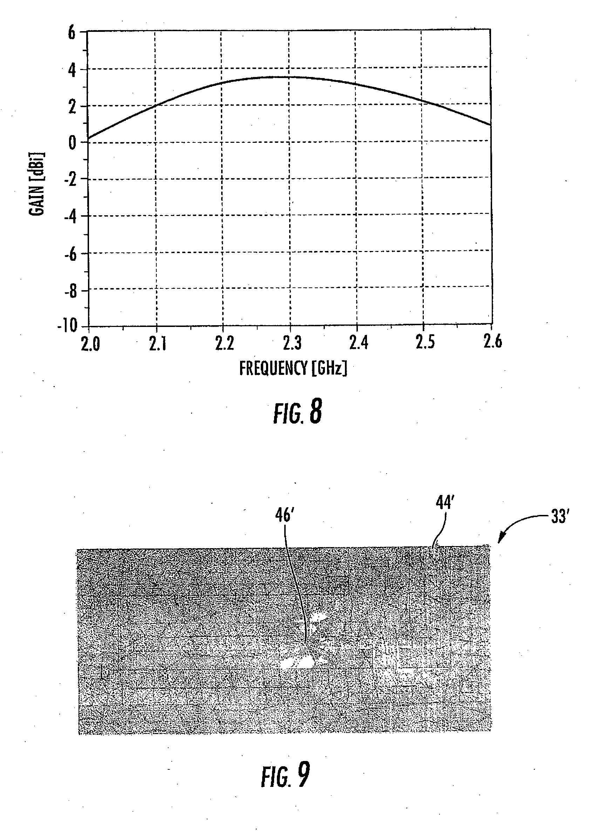

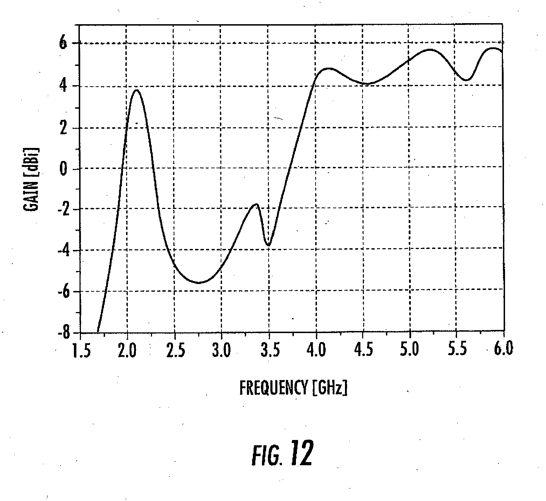

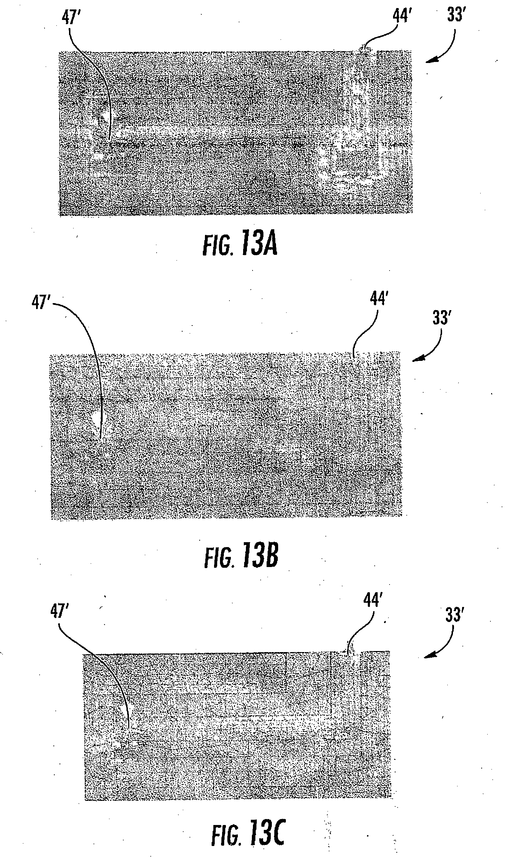

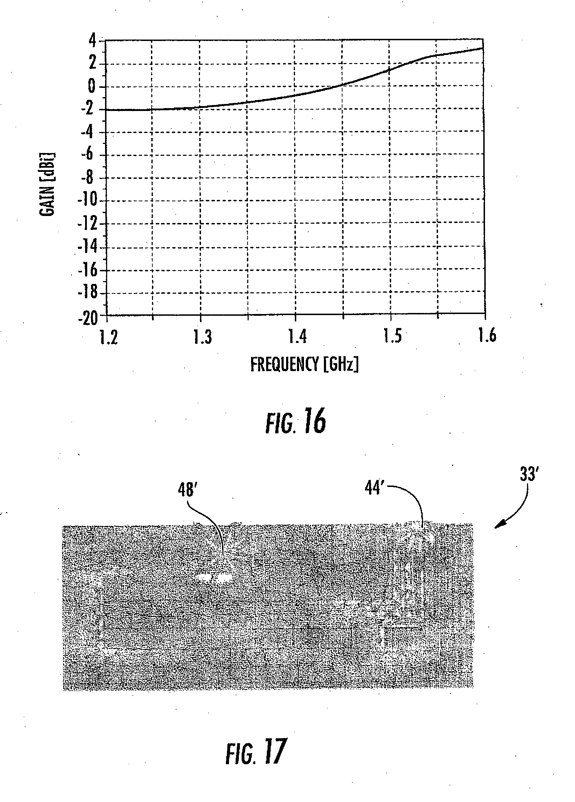

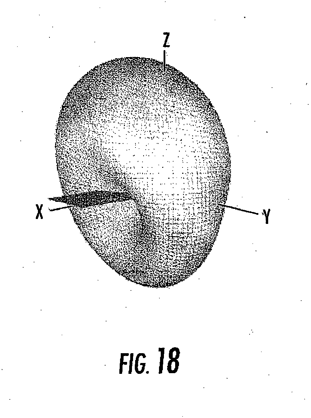

Turning now to FIGS. 3 through 18, simulated operating characteristics of one implementation of the above-noted patch antenna configuration will now be presented. It should be noted that the patch structure used in the simulations has slightly different dimensions than the general shape illustrated in FIG. 2. Dimensions of the patch antenna structure used in the simulations are provided in Table 1, below.

**Table 1**

| **Dimension** | **Value (mm)** |
|---|---|
| L₁ | 41 |
| L₂ | 4.9 |
| L₃ | 14 |
| L₄ | 7 |
| W₁ | 3 |
| W₂ | 3 |
| W₃ | 2.8 |
| W₄ | 3 |
| W₅ | 3.1 |
| W₆ | 5.5 |
| W₇ | 4 |

By way of example, the different operating frequencies in the present example are within a range of about 900 MHz to 6 GHz, although other frequencies may also be used. The different operating frequencies have different user functions associated therewith. That is, certain of the operating frequencies may be used for one or more of voice communications (i.e., cellular phone calls) and data communications, such as Internet or electronic mail (email) data communication, as will be appreciated by those skilled in the art.

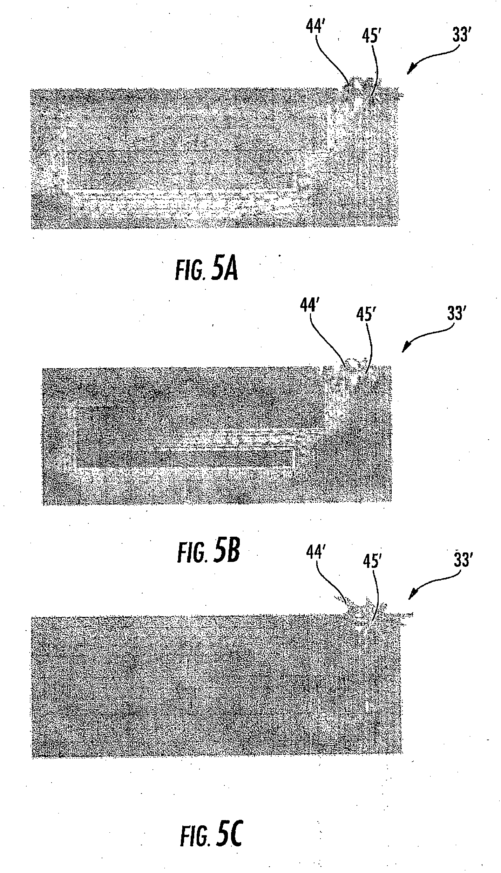

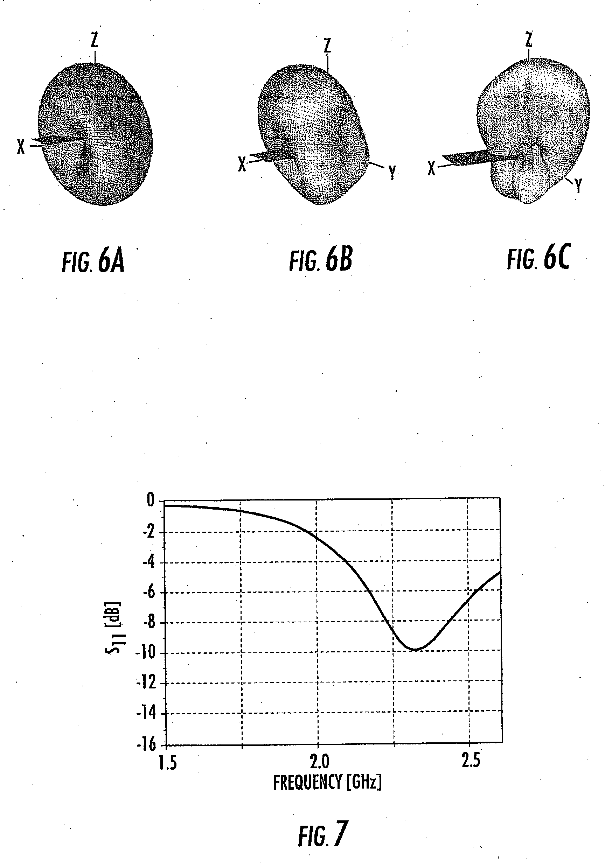

The operating frequency characteristics associated with the first feed point **45** are illustrated in FIGS. 3-6. More particularly, in the exemplary configuration operation the antenna **33** is tuned to provide operation at 900 MHz, 1800 MHz, and 5 GHz via a selective connection of appropriate wireless RF transceivers **35** to the first feed point **45.** First and second plots **50, 51** of simulated return loss vs. frequency for first and second simulations are shown in FIG. 3, and a simulated gain vs. frequency plot is shown in FIG. 4. The simulated current distributions across the patch antenna **33** at the above-noted frequencies are shown in FIGS. 5A-5C respectively, while the gain patterns for the frequencies are respectively shown in FIGS. 6A-6C.

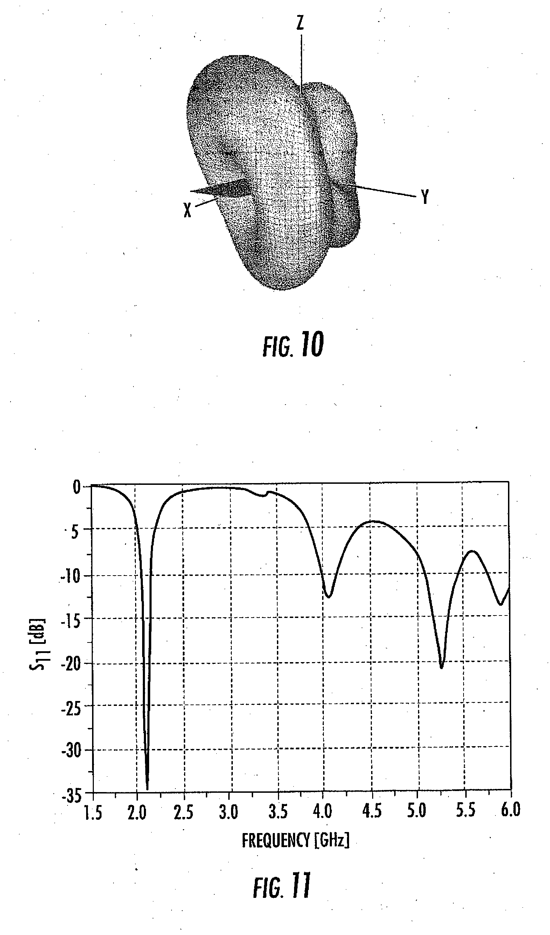

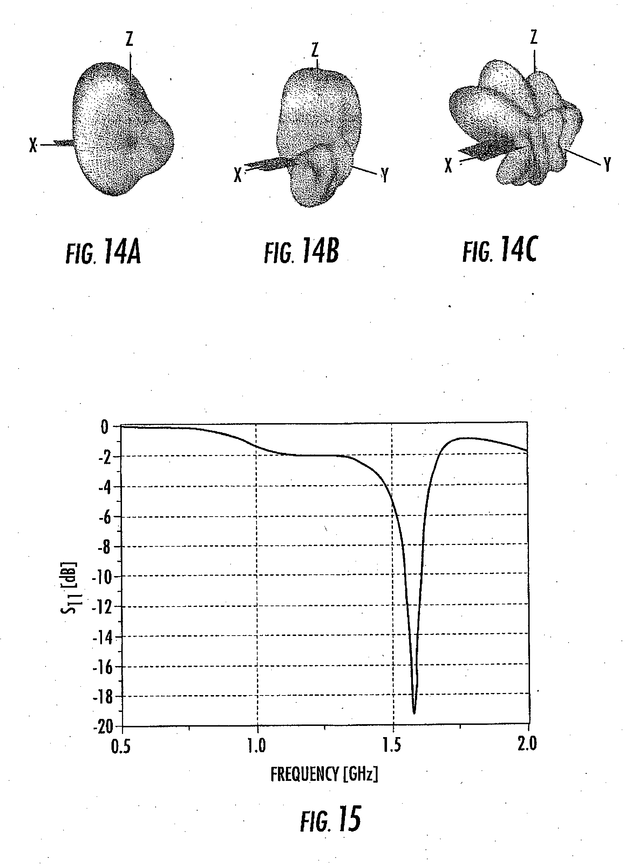

The second feed point **46** is used for an operating frequency of 2.45 GHz. Simulated return loss vs. frequency, simulated gain vs. frequency, simulated current distribution, and simulated antenna radiation patterns associated with using the second feed point **46** at this frequency are shown in FIGS. 7, 8, 9, and 10, respectively. Similar to the first feed point **45,** the third feed point **47** is also used for three operating frequency bands, which are 2.1 GHz, 5.2 GHz, and 5.8 GHz. Simulated return loss vs. frequency, simulated gain vs. frequency, simulated current distribution, and simulated antenna radiation patterns associated with using the third feed point **47** at these frequencies are shown in FIGS. 11, 12, 13A-13C, and 14A-14C, respectively. Furthermore, similar to the second feed point **46,** the fourth feed point **48** is used for one operating frequency of 1.54 GHz. Simulated return loss vs. frequency, simulated gain vs. frequency, simulated current distribution, and simulated antenna radiation patterns associated with using the third feed point **48** at this frequency are shown in FIGS. **15****,** **16****,** **17****,** and **18****,** respectively.

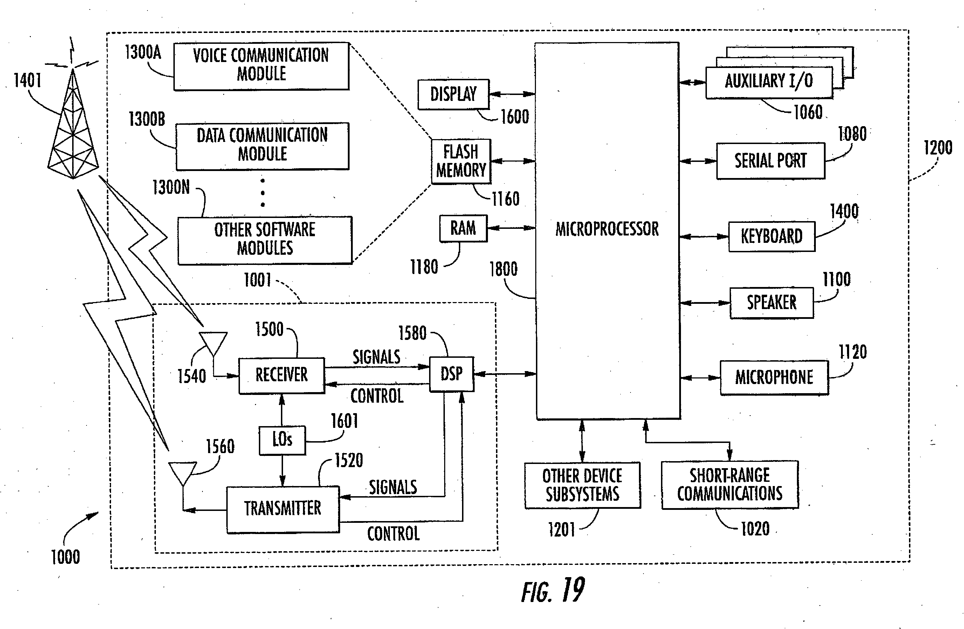

Other exemplary components which may be included in the above-described device **30** are now generally discussed with reference to a hand-held mobile wireless communications device **1000** shown in FIG. 19. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 19. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device 1000 may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

## Claims

1. A mobile wireless communications device (30) comprising:
a common antenna comprising a patch antenna (33) having at least one slot therein and a plurality of signal feed points (34a-34n) spaced apart from each other directly on said patch antenna;
a plurality of wireless radio frequency "RF" transceivers (35a-35n) electrically coupled to respective ones of said plurality of spaced apart signal feed points (34a-34n) on said patch antenna (33), wherein each wireless radio frequency transceiver (35a-35n) has a respective different operating frequency band associated therewith; and,
a controller (36) configured to selectively operate at least some of said plurality of wireless radio frequency transceivers (35a-35n) to provide operation of the patch antenna at respective different operating frequency bands of said operating wireless radio frequency transceivers at the same time.

2. The mobile wireless communications device (30) of claim 1, further comprising:
a housing; and
a dielectric substrate (37) carried within said housing (32); wherein said patch antenna (33) comprises at least one conductive trace on said dielectric substrate (37).

3. The mobile wireless communications device (30) of claim 1, wherein said patch antenna (33) further comprises:
a plurality of slots, wherein each slot of said plurality of slots has dimensions of a width and a length; and wherein each dimension of said plurality of slots is selected to enable said patch antenna to resonate at a selected operating frequency.

4. The mobile wireless communications device (30) of claim 1, wherein said patch antenna has a perimeter of a rectangular shape.

5. The mobile wireless communications device (30) of claim 3, wherein a first slot and a second slot of said plurality of slots (40, 41) defines an exterior portion (42) and an interior portion (43) within a perimeter of said patch antenna.

6. The mobile wireless communications device (30) of claim 1, wherein a location of each signal feed point of said plurality of signal feed points (34a-34n) on said patch antenna (33) determines a set of operating frequency bands in said plurality of different operating frequency bands that corresponds to each respective signal feed point; and
wherein at least some of said plurality of signal feed points are selectively excited to operate said patch antenna in sets of operating frequency bands corresponding to said selectively excited signal feed points at the same time.

7. The mobile wireless communications device (30) of claim 1, wherein at least one of said plurality of wireless radio frequency transceivers (35a-35n) is a cellular transceiver.

8. The mobile wireless communications device (30) of claim 1, wherein said respective different operating frequencies are within a range of about 900 MHz to 6 GHz.

9. The mobile wireless communications device (30) of claim 1, wherein each different operating frequency band of said at least some wireless radio frequency transceivers corresponds to a different user function.

10. The mobile wireless communications device (30) of claim 9, wherein said different user function is selected from the group consisting of voice communication, email reception, email transmission, data reception, data transmission, and data communication.

11. A method of operating a mobile wireless communications device (30), the method comprising:
selecting, by a controller, a plurality of wireless radio frequency transceivers (35a-35n) electrically coupled to respective ones of a plurality of signal feed points (34a-34n) directly on a common antenna comprising a patch antenna in said mobile wireless communications device, said patch antenna having at least one slot therein; and,
operating, by said controller (36), at least some of said selected plurality of wireless radio frequency transceivers (35a-35n) having respectively different operating frequency bands at the same time, wherein operating said selected plurality of wireless radio frequency transceivers avoids an occurrence of electromagnetic interference.

12. The method of claim 11, further comprising:
selectively tuning said patch antenna, said patch antenna having a plurality of slots, to said number of respective different operating frequencies through defining length and width dimensions of a plurality of leg portions of the plurality of slots within said patch antenna.

13. The method of claim 11, further comprising:
selectively tuning to each respective different operating frequency band of said patch antenna through defining dimensions of length and width of the at least one slot in said patch antenna (43).

## Patentansprüche

1. Eine mobile drahtlose Kommunikationsvorrichtung (30), die aufweist:
eine gemeinsame Antenne, die eine Patch-Antenne (33) mit zumindest einem Schlitz darin und eine Vielzahl von Signalzufuhrpunkten (34a-34n) aufweist, die voneinander beabstandet sind direkt auf der Patch-Antenne;
eine Vielzahl von drahtlosen Funkfrequenz(RF - radio frequency)-Transceivern (35a-35n), die mit jeweiligen der Vielzahl von voneinander beabstandeten Signalzufuhrpunkten (34a-34n) auf der Patch-Antenne (33) elektrisch gekoppelt sind, wobei jeder drahtlose Funkfrequenz-Transceiver (35a-35n) ein jeweiliges verschiedenes Betriebsfrequenzband damit assoziiert hat; und
eine Steuervorrichtung (36), die konfiguriert ist zum selektiven Betreiben zumindest einiger der Vielzahl von drahtlosen Funkfrequenz-Transceivern (35a-35n), um einen Betrieb der Patch-Antenne bei jeweiligen verschiedenen Betriebsfrequenzbändern der arbeitenden drahtlosen Funkfrequenz-Transceiver gleichzeitig vorzusehen.

2. Die mobile drahtlose Kommunikationsvorrichtung (30) gemäß Anspruch 1, die weiter aufweist:
ein Gehäuse; und
ein dielektrisches Substrat (37), das in dem Gehäuse (32) getragen wird;
wobei die Patch-Antenne (33) zumindest eine leitende Bahn auf dem dielektrischen Substrat (37) aufweist.

3. Die mobile drahtlose Kommunikationsvorrichtung (30) gemäß Anspruch 1, wobei die Patch-Antenne (33) weiter aufweist:
eine Vielzahl von Schlitzen, wobei jeder Schlitz der Vielzahl von Schlitzen Dimensionen einer Breite und Länge hat; und wobei jede Dimension der Vielzahl von Schlitzen ausgewählt ist, zu ermöglichen, dass die Patch-Antenne an einer ausgewählten Betriebsfrequenz schwingt.

4. Die mobile drahtlose Kommunikationsvorrichtung (30) gemäß Anspruch 1, wobei die Patch-Antenne einen Umfang mit einer rechteckigen Form hat.

5. Die mobile drahtlose Kommunikationsvorrichtung (30) gemäß Anspruch 3, wobei ein erster Schlitz und ein zweiter Schlitz der Vielzahl von Schlitzen (40, 41) einen äußeren Teil (42) und einen inneren Teil (43) in einem Umfang der Patch-Antenne definieren.

6. Die mobile drahtlose Kommunikationsvorrichtung (30) gemäß Anspruch 1, wobei eine Position jedes Signalzufuhrpunkts der Vielzahl von Signalzufuhrpunkten (34a-34n) auf der Patch-Antenne (33) einen Satz von Betriebsfrequenzbändern in der Vielzahl von verschiedenen Betriebsfrequenzbändern bestimmt, der jedem jeweiligen Signalzufuhrpunkt entspricht; und
wobei zumindest einige der Vielzahl von Signalzufuhrpunkten selektiv angeregt sind, um die Patch-Antenne in Sätzen von Betriebsfrequenzbändern entsprechend den selektiv angeregten Signalzufuhrpunkten gleichzeitig zu betreiben.

7. Die mobile drahtlose Kommunikationsvorrichtung (30) gemäß Anspruch 1, wobei zumindest einer der Vielzahl von drahtlosen Funkfrequenz-Transceivern (35a-35n) ein zellularer Transceiver ist.

8. Die mobile drahtlose Kommunikationsvorrichtung (30) gemäß Anspruch 1, wobei die jeweiligen verschiedenen Betriebsfrequenzen in einem Bereich von ungefähr 900 MHz bis 6 GHz sind.

9. Die mobile drahtlose Kommunikationsvorrichtung (30) gemäß Anspruch 1, wobei jedes verschiedene Betriebsfrequenzband der zumindest einigen drahtlosen Funkfrequenz-Transceiver einer anderen Benutzerfunktion entspricht.

10. Die mobile drahtlose Kommunikationsvorrichtung (30) gemäß Anspruch 9, wobei die andere Benutzerfunktion aus der Gruppe ausgewählt ist, die aus Sprachkommunikation, Email-Empfang, Email-Übertragung, Datenempfang, Datenübertragung und Datenkommunikation besteht.

11. Ein Verfahren zum Betreiben einer mobilen drahtlosen Kommunikationsvorrichtung (30), wobei das Verfahren aufweist:
Auswählen, durch eine Steuervorrichtung, einer Vielzahl von drahtlosen Funkfrequenz-Transceivern (35a-35n), die mit jeweiligen einer Vielzahl von Signalzufuhrpunkten (34a-34n) direkt auf einer gemeinsamen Antenne, die eine Patch-Antenne aufweist, elektrisch gekoppelt sind in der mobilen drahtlosen Kommunikationsvorrichtung, wobei die Patch-Antenne zumindest einen Schlitz darin hat; und
Betreiben, durch die Steuervorrichtung (36), zumindest einiger der ausgewählten Vielzahl von drahtlosen Funkfrequenz-Transceivern (35a-35n) mit jeweiligen verschiedenen Betriebsfrequenzbändern gleichzeitig, wobei das Betreiben der ausgewählten Vielzahl von drahtlosen Funkfrequenz-Transceivern ein Auftreten einer elektromagnetischen Interferenz verhindert.

12. Das Verfahren gemäß Anspruch 11, das weiter aufweist:
selektives Einstellen der Patch-Antenne, wobei die Patch-Antenne eine Vielzahl von Schlitzen hat, auf die Anzahl von jeweiligen verschiedenen Betriebsfrequenzen durch Definieren von Länge- und Breite-Dimensionen einer Vielzahl von Abschnittsteilen der Vielzahl von Schlitzen in der Patch-Antenne.

13. Das Verfahren gemäß Anspruch 11, das weiter aufweist:
selektives Einstellen auf jedes jeweilige verschiedene Betriebsfrequenzband der Patch-Antenne durch Definieren von Dimensionen von Länge und Breite des zumindest einen Schlitzes in der Patch-Antenne (43).

## Revendications

1. Dispositif de communication mobile sans fil (30) comprenant :
une antenne commune constituée d'une antenne plaquée (33) qui comporte au moins une encoche et une pluralité de points d'alimentation du signal (34a à 34n) écartés les uns des autres et placés directement sur ladite antenne plaquée ;
une pluralité d'émetteurs-récepteurs de radiofréquences sans fil (35a à 35n), couplés électriquement à des points respectifs parmi ladite pluralité de points d'alimentation du signal écartés les uns des autres (34a à 34n), chaque émetteur-récepteur de radiofréquences sans fil (35a à 35n) étant associé à une bande de fréquences de fonctionnement différente respective ; et
un contrôleur (36) configuré pour faire fonctionner sélectivement au moins certains émetteurs-récepteurs parmi ladite pluralité d'émetteurs-récepteurs de radiofréquences sans fil (35a à 35n) afin de faire fonctionner simultanément l'antenne plaquée sur des bandes de fréquences de fonctionnement différentes respectives desdits émetteurs-récepteurs de radiofréquences sans fil.

2. Dispositif de communication mobile sans fil (30) selon la revendication 1, comprenant en outre :
un boîtier ; et
un substrat diélectrique (37) transporté dans ledit boîtier (32), ladite antenne plaquée (33) comprenant au moins une piste conductrice sur ledit substrat diélectrique (37).

3. Dispositif de communication mobile sans fil (30) selon la revendication 1, dans lequel ladite antenne plaquée (33) comprend en outre :
une pluralité d'encoches, chaque encoche parmi ladite pluralité d'encoches ayant comme dimensions une largeur et une longueur et chaque dimension de chaque encoche parmi ladite pluralité d'encoches étant sélectionnée de manière à permettre à ladite antenne plaquée de résonner à une fréquence de fonctionnement sélectionnée.

4. Dispositif de communication mobile sans fil (30) selon la revendication 1, dans lequel ladite antenne plaquée possède un périmètre de forme rectangulaire.

5. Dispositif de communication mobile sans fil (30) selon la revendication 3, dans lequel une première encoche et une seconde encoche, parmi ladite pluralité d'encoches (40, 41) définissent une partie extérieure (42) et une partie intérieure (43) dans un périmètre de ladite antenne plaquée.

6. Dispositif de communication mobile sans fil (30) selon la revendication 1, dans lequel une position de chaque point d'alimentation du signal parmi ladite pluralité de points d'alimentation du signal (34a à 34n) sur ladite antenne plaquée (33) détermine un ensemble de bandes de fréquences de fonctionnement parmi ladite pluralité de fréquences de fonctionnement différentes qui correspond à chaque point d'alimentation du signal respectif ; et
dans lequel au moins certains des points parmi ladite pluralité de points d'alimentation du signal sont sélectivement excités afin de faire fonctionner simultanément ladite antenne plaquée dans des ensembles de bandes de fréquences de fonctionnement qui correspondent auxdits points d'alimentation du signal excités.

7. Dispositif de communication mobile sans fil (30) selon la revendication 1, dans lequel au moins un émetteur-récepteur parmi ladite pluralité d'émetteurs-récepteurs de radiofréquences sans fil (35a à 35n) est un émetteur-récepteur cellulaire.

8. Dispositif de communication mobile sans fil (30) selon la revendication 1, dans lequel lesdites fréquences de fonctionnement différentes se situent sur une plage d'environ 900 MHz à 6 GHz.

9. Dispositif de communication mobile sans fil (30) selon la revendication 1, dans lequel chaque bande de fréquences de fonctionnement différente d'au moins certains des émetteurs-récepteurs de radio fréquences sans fil correspond à une fonction différente d'utilisation.

10. Dispositif de communication mobile sans fil (30) selon la revendication 9, dans lequel ladite fonction différente d'utilisation est sélectionnée dans le groupe constitué de communication vocale, réception de courriel, émission de courriel, réception de données, émission de données et communication de données.

11. Procédé de fonctionnement d'un dispositif de communication mobile sans fil (30), le procédé comprenant les étapes consistant à :
sélectionner par un contrôleur une pluralité d'émetteurs-récepteurs de radiofréquences sans fil (35a à 35n) couplés électriquement à des points respectifs parmi une pluralité de points d'alimentation du signal (34a à 34n) placés directement sur une antenne commune constituée d'une antenne plaquée sur ledit dispositif de communication mobile sans fil, ladite antenne plaquée possédant au moins une encoche ; et
faire fonctionner simultanément par ledit contrôleur (36) au moins certains desdits plusieurs émetteurs-récepteurs de radiofréquences sans fil (35a à 35n) sélectionnés qui possèdent des bandes de fréquences de fonctionnement différentes respectives, le fonctionnement desdits plusieurs émetteurs-récepteurs de radiofréquences sans fil (35a à 35n) sélectionnés évitant que se produisent des interférences électromagnétiques.

12. Procédé selon la revendication 11, comprenant en outre l'étape consistant à :
syntoniser sélectivement ladite antenne plaquée, ladite antenne plaquée possédant une pluralité d'encoches, sur ledit nombre de bandes de fréquences de fonctionnement différentes en définissant des dimensions de longueur et de largeur d'une pluralité de branches parmi la pluralité d'encoches au sein de ladite antenne plaquée.

13. Procédé selon la revendication 11, comprenant en outre l'étape consistant à :
syntoniser sélectivement sur chaque bande de fréquences de fonctionnement différente respective de ladite antenne plaquée en définissant des dimensions de longueur et de largeur de ladite au moins une encoche dans ladite antenne plaquée (33).
